# FASCICULE DE BREVET EUROPEEN

(11) **EP 3 215 051 B1**
(45) Date de publication et mention de la délivrance du brevet: **11.07.2018**
(21) Numéro de dépôt: 15798164.8
(22) Date de dépôt: 03.11.2015
(51) Int. Cl.: A61D 19/02

(54) **SACHET DE CONDITIONNEMENT DE SEMENCE ANIMALE DILUÉE CONVENANT POUR L'INSÉMINATION ARTIFICIELLE, EN PARTICULIER DES ESPÈCES PORCINES; ET SYSTÈME LE COMPORTANT**
BEUTEL ZUM VERPACKEN VON VERDÜNNTEM TIERISCHEM SAMEN ZUR KÜNSTLICHEN BESAMUNG, INSBESONDERE VON SCHWEINEN, SOWIE SYSTEM DAMIT
BAG FOR PACKAGING DILUTED ANIMAL SEMEN SUITABLE FOR ARTIFICIAL INSEMINATION, IN PARTICULAR OF PORCINE SPECIES; AND SYSTEM COMPRISING SAME

(30) Priorité: 04.11.2014 FR 1460647
(43) Date de publication de la demande: 13.09.2017
(73) Titulaire: IMV Technologies, 61300 Saint-Ouen-Sur-Iton (FR)
(72) Inventeur: SCHMITT, Eric, F-53700 Villaines-la-Juhel (FR); GORGES, Jean-Charles, F-72610 Chenay (FR)
(74) Mandataire: Santarelli
(86) Numéro de dépôt international: PCT/FR2015/052950
(87) Numéro de publication internationale: WO 2016/071618

(56) Documents cités:
- WO-A1-00/72839
- FR-A1- 2 848 812
- US-A- 4 356 259

## Description

L'invention a trait d'une manière générale à la conservation de la semence animale diluée convenant pour l'insémination artificielle, en particulier des espèces porcines.

On sait que pour ces espèces, entre le prélèvement de la semence fraiche et l'insémination, on mélange la semence fraiche avec un milieu de dilution afin d'obtenir de la semence diluée puis la semence diluée est conditionnée en doses individuelles ayant chacune un volume prédéterminé convenant pour effectuer une insémination artificielle, chaque dose étant conditionnée dans un récipient où elle va être conservée jusqu'à la mise en oeuvre de l'insémination artificielle.

Pour conditionner les doses individuelles de semence diluée, on connaît déjà, notamment par la demande de brevet européen EP 0 605 406, par la demande PCT WO 01/13818, par la demande de brevet français 2 813 784 ou par la demande de brevet français 2 848 812 des sachets comportant deux feuilles en matière thermoplastique souple fixées l'une à l'autre par une zone de soudure délimitant une poche ayant un volume prédéterminé lorsque le sachet est rempli, ladite poche étant prévue pour contenir une dose de semence animale diluée ayant ce volume prédéterminé.

En général, les feuilles en matière thermoplastique souple sont bi-couches, avec la couche interne (couche ayant une surface en regard de l'autre feuille et en regard de la poche) qui est en matière thermoplastique soudable pour permettre la réalisation de la zone de soudure, et avec la couche externe qui est en général étanche aux gaz et a un point de fusion plus élevé que celui de la matière thermoplastique soudable formant la couche interne.

La zone de soudure délimite en général, en outre de la poche, un conduit par lequel la poche est remplie en semence animale diluée et un conduit servant à relier le sachet à une sonde d'insémination artificielle pour transférer à l'animal la dose conditionnée dans le sachet.

Pour préserver la qualité de la semence pendant la durée de conservation, il est connu de prévoir dans le milieu de dilution des éléments nutritifs ainsi que des éléments antibactériens, notamment des antibiotiques.

L'invention vise à supprimer ou en tout cas à réduire fortement l'utilisation des antibiotiques pour la conservation de la semence animale diluée.

L'invention propose à cet effet un sachet de conditionnement de semence animale diluée convenant pour l'insémination artificielle, en particulier des espèces porcines, comportant deux feuilles souples fixées l'une à l'autre par une zone de soudure délimitant une poche ayant un volume prédéterminé lorsque ledit sachet est rempli, ladite poche étant prévue pour contenir une dose de dite semence animale diluée ayant ledit volume prédéterminé, chaque dite feuille souple ayant sa surface en regard de ladite poche qui fait partie d'une couche de matière thermoplastique soudable ; caractérisé en ce que, pour une ou de préférence pour chaque dite feuille, ladite couche de matière thermoplastique soudable comporte du triclosan ; et le rapport entre ledit volume prédéterminé de ladite poche et la somme des superficies des surfaces desdites feuilles en regard de ladite poche est compris entre 0,3 ml/cm² et 0,5 ml/cm².

On sait que le triclosan est du C₁₂H₇Cl₃O₂ dont la formule est la suivante : 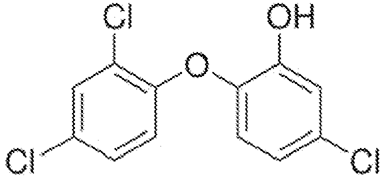 et qu'il est identifié par le numéro CAS 3380-34-5.

On sait également que le triclosan est une substance biocide apte à être incorporée dans les matières plastiques pour que ces dernières présentent à leur tour des propriétés biocides, et qu'en principe le triclosan est également considéré comme un agent spermicide (voir par exemple la demande PCT WO 00/72839).

Bien que cela soit surprenant, les travaux menés par la demanderesse ont permis de constater qu'il est possible, en particulier ainsi qu'exposé ci-après, de munir la couche de matière thermoplastique soudable d'une quantité de triclosan suffisamment grande pour que la dose de semence diluée contenue dans le sachet reste bactériostatique et suffisamment petite pour ne pas être défavorable à la motilité des spermatozoïdes que contient la dose.

L'invention est basée sur l'observation que dans un sachet de conservation de semence diluée, la superficie de la zone de contact entre la dose de semence diluée et les feuilles du sachet est particulièrement élevée vis-à-vis du volume que peut contenir la poche.

A partir de cette observation, on s'est posé la question de savoir si l'effet du triclosan de la ou des feuilles sur la semence diluée pourrait se produire non pas par libération du triclosan des feuilles dans la semence mais essentiellement par effet de contact, vu l'importance de la superficie susmentionnée dont il résulte que chaque partie de la semence diluée contenue dans le sachet est relativement proche des surfaces des feuilles en regard de la poche.

En d'autres termes, ou s'est posé la question de savoir si un effet surfacique (et non volumique) suffirait pour obtenir l'effet bactériostatique permettant la conservation de la dose de semence diluée.

Cette question a été posée en supposant que si le triclosan n'est pas libéré dans la semence diluée (ou tout du moins libéré en très faible quantité), l'effet du triclosan sur les spermatozoïdes sera minime, et donc non défavorable à leur motilité, et que par conséquent la semence conservera ses qualités fertilisantes.

Les travaux menés par la demanderesse ont permis de vérifier qu'effectivement, si l'on introduit dans la couche de matière thermoplastique soudable de la ou des feuilles du sachet une quantité appropriée de triclosan, en particulier telle que décrite ci-après, il est possible d'obtenir l'effet bactériostatique requis pour la conservation de la semence diluée sans libérer (ou tout du moins en libérant une très faible quantité) de triclosan dans la dose contenue dans le sachet ; et qu'effectivement les spermatozoïdes ont une motilité qui reste performante à l'issue de leur séjour dans le sachet.

Dans le sachet selon l'invention, la plage de valeurs du rapport entre le volume de la poche lorsqu'elle est remplie et la superficie des surfaces de la ou des feuilles en regard de la poche a été sélectionnée comme mettant en oeuvre de façon particulièrement efficace les effets techniques combinés susmentionnés.

On notera que grâce au sachet selon l'invention, dans le système formé par le milieu de dilution et par les sachets de conditionnement, l'effet de maintien de la dose de semence diluée dans des conditions bactériostatiques n'a plus à être procuré par le milieu de dilution, ce qui permet de supprimer ou en tout cas de réduire très fortement les antibiotiques classiquement prévus dans le milieu de dilution.

On observera encore que l'absence de libération de triclosan dans la dose de semence diluée contenue dans le sachet, ou en tout cas la quasi-absence de libération de triclosan dans la semence diluée, l'animal ne reçoit pas, ou alors une quantité infime, de substance biocide à l'occasion de l'insémination artificielle.

Selon des caractéristiques avantageuses :
- ledit volume prédéterminé de ladite poche est compris entre 50 ml et 100 ml ;
- ladite couche de matière thermoplastique soudable comporte entre 1 mg/m² et 40 mg/m² de triclosan ;
- ladite couche de matière thermoplastique soudable comporte entre 10 mg/m² et 40 mg/m² de triclosan ;
- ladite couche de matière thermoplastique soudable comporte plusieurs sous-couches faites dans des nuances différentes de ladite matière thermoplastique soudable, une ou de préférence chaque dite feuille souple ayant sa surface en regard de ladite poche qui fait partie de la sous-couche la plus interne, seule la sous-couche la plus interne comportant du triclosan ;
- dans la sous-couche la plus interne il y a entre 0,0075 % et 0,3 % en poids de triclosan ;
- ladite sous-couche la plus interne représente entre 12 % et 18 % en poids de la couche de matière thermoplastique soudable ;
- une ou de préférence chaque dite feuille souple comporte, en outre de ladite couche de matière thermoplastique soudable, au moins une autre couche de matière distincte de ladite matière thermoplastique soudable, recouvrant ladite couche de matière thermoplastique soudable du côté opposé à ladite poche, seule ladite couche de matière thermoplastique soudable comportant du triclosan ;
- ladite autre couche de matière distincte de ladite matière thermoplastique soudable est une couche externe faite dans une matière thermoplastique ;
- ladite matière thermoplastique soudable est du polyéthylène (PE) et ladite matière thermoplastique de la couche externe est du polyester (PET) ; et/ou
- ladite couche de matière thermoplastique soudable a une épaisseur comprise entre 20 µm et 110 µm.

L'invention vise également, sous un second aspect, un système pour conditionner dans des sachets de la semence animale diluée, convenant pour l'insémination artificielle, en particulier pour les espèces porcines, comportant un milieu de dilution de semence fraiche pour donner de la semence diluée et des sachets à remplir avec ladite semence diluée ; caractérisé en ce que lesdits sachets sont tels qu'exposé ci-dessus et ledit milieu de dilution est sans antibiotique.

L'exposé de l'invention sera maintenant poursuivi par la description détaillée d'exemples de réalisation, donnée ci-après à titre illustratif et non limitatif, en référence aux dessins annexés, sur lesquels :
- la figure 1 est une vue en plan d'un sachet selon l'invention à l'état plat, c'est-à-dire non rempli ;
- la figure 2 est la vue en coupe repérée par II-II sur la figure 1 ;
- les figures 3 et 4 sont des vues semblables aux figures 1 et 2, mais avec le sachet rempli d'une dose de semence diluée ;
- la figure 5 est un agrandissement du détail V de la figure 4 ;
- la figure 6 est une vue schématique montrant une étape de fabrication d'une feuille en matière thermoplastique avec laquelle est fait le sachet ;
- la figure 7 est une vue en coupe de l'un des films montrés sur la figure 6 ;
- la figure 8 montre un sachet de collecte contenant de la semence animale fraiche ;
- la figure 9 montre un flacon contenant un milieu de dilution à mélanger avec de la semence animale fraiche pour donner de la semence animale diluée ; et
- la figure 10 montre un pichet recouvert d'un sac de protection contenant de la semence animale diluée obtenue par mélange de la semence animale fraiche du sachet de la figure 8 et du milieu de dilution du flacon de la figure 9.

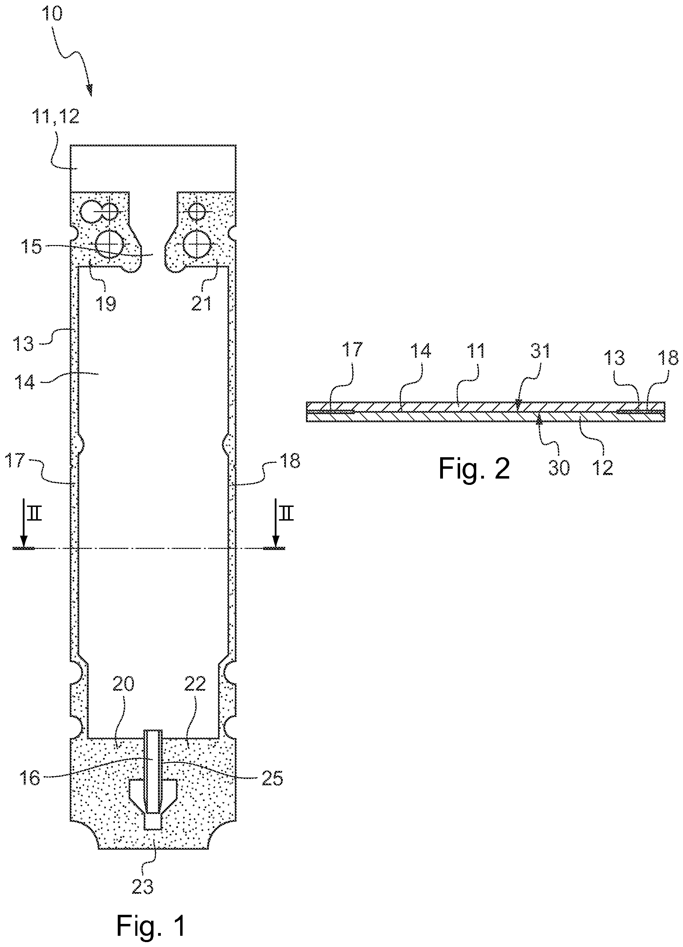

Le sachet 10 illustré sur la figure 1 comporte deux feuilles 11 et 12 en matière thermoplastique souple fixées l'une à l'autre par une zone de soudure 13 délimitant une poche 14, un conduit de remplissage 15 et un conduit de vidage 16.

La zone de soudure 13 comporte deux tronçons latéraux 17 et 18, quatre tronçons d'extrémité 19, 20, 21 et 22 ainsi qu'un pontet 23.

Les tronçons latéraux 17 et 18 s'étendent parallèlement et à distance l'un de l'autre.

Le tronçon latéral 17 se raccorde à l'une de ses extrémités au tronçon d'extrémité 19 tandis qu'il se raccorde à l'autre extrémité au tronçon d'extrémité 20.

Le tronçon latéral 18 se raccorde à l'une de ses extrémités au tronçon d'extrémité 21 tandis qu'il se raccorde à l'autre extrémité au tronçon d'extrémité 22.

Le pontet 23 s'étend entre le tronçon d'extrémité 20 et le tronçon d'extrémité 22.

Le conduit de remplissage 15 est situé entre le tronçon d'extrémité 19 et le tronçon d'extrémité 21.

Le conduit de vidage 16 est situé entre le tronçon d'extrémité 20 et le tronçon d'extrémité 22 et est fermé, à l'opposé de la poche 14, par le pontet 23.

Ici, les tronçons latéraux 17 et 18 sont relativement étroits tandis que les tronçons d'extrémités 19, 20, 21 et 22 sont relativement larges.

Ici, chaque tronçon latéral 17 et 18 est situé entre la poche 14 et un bord respectif du sachet 10.

A l'état plat du sachet 10 montré sur les figures 1 et 2, la poche 14 est vide, les feuilles 11 et 12 étant l'une contre l'autre.

La poche 14 a un contour globalement rectangulaire dont les grands côtés sont délimités par les tronçons latéraux 17 et 18 et les petits côtés par les tronçons d'extrémités 19, 21 et 20, 22.

Le conduit de remplissage 15 débouche à une extrémité dans la poche 14 et à l'autre extrémité à l'extérieur de la poche 14.

Le conduit de vidage 16 débouche à une extrémité dans la poche 14 et est fermé à l'autre extrémité par le pontet 23.

En outre des feuilles 11 et 12 fixées l'une à l'autre par la zone de soudure 13, le sachet 10 comporte ici une canule 25 disposée dans le conduit de vidage 16.

Pour remplir le sachet 10, et plus précisément la poche 14 de celui-ci, on introduit la semence diluée par le conduit de remplissage 15.

En pratique, on utilise un embout qu'on insère dans le conduit de remplissage 15 pour commencer à mettre en volume le sachet 10.

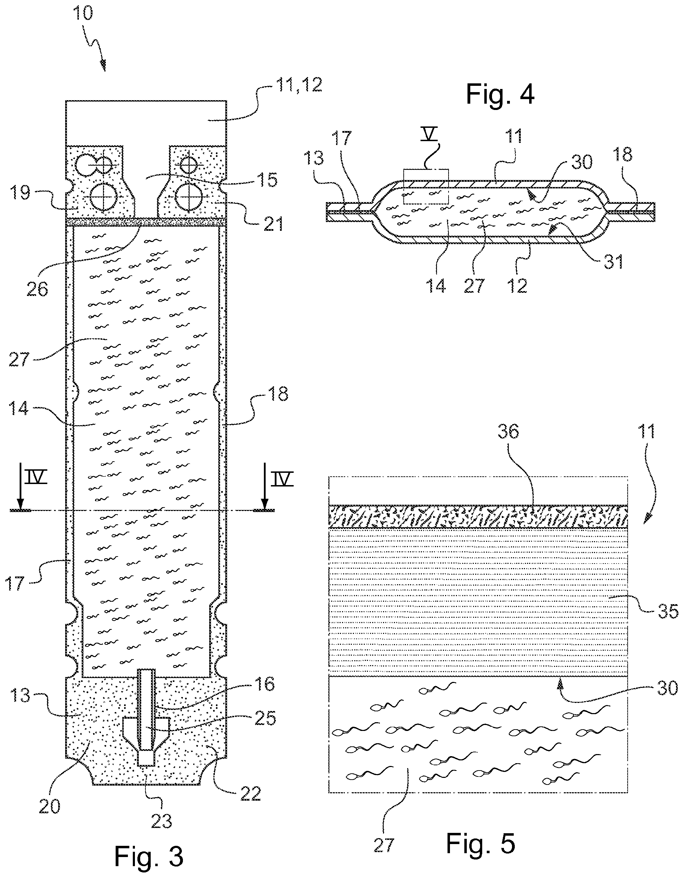

Une fois que le sachet 10, et plus précisément la poche 14, a été ainsi remplie avec la dose 27 (figures 3 et 4) de semence diluée qui a le volume prédéterminé pour lequel la poche 14 a été configurée, le conduit de remplissage 15 est obturé grâce à un cordon de soudure 26 (figure 3).

Le conditionnement de la dose 27 de semence diluée est alors terminé.

Pour effectuer une insémination artificielle avec la dose 27 de semence diluée contenue dans le sachet 10, on dégage la canule 25, par exemple en percutant le pontet 23 avec l'extrémité de la canule opposée à la poche 14, l'extrémité de la canule 25 opposée à la poche 14 devient donc accessible et on y connecte une sonde d'insémination artificielle.

Pour plus de détails sur le sachet 10, on pourra se reporter à la demande de brevet français 2 813 784.

Le sachet 10 illustré sur les figures 1 à 4 est prévu pour contenir une dose 27 de semence diluée dont le volume est de 70 ml.

Lorsque le sachet 10 est à l'état plat (figures 1 et 2), la largeur de la poche 14 (distance entre les tronçons latéraux 17 et 18) est de 5,5 cm et la distance entre les tronçons d'extrémités 19, 21 et 20, 22 est de 17,3 cm.

Ainsi, la superficie de la surface 30 de la feuille 11 en regard de la poche 14 est de 95 cm².

De même, la superficie de la surface 31 de la feuille 12 en regard de la poche 14 est de 95 cm².

Bien évidemment, cette superficie reste la même lorsque le sachet est à l'état rempli montré sur les figures 3 et 4.

Ainsi, la somme des superficies des feuilles 11 et 12 en regard de la poche 14 est de 95 cm² + 95 cm² soit 190 cm².

Le rapport entre le volume qu'il est prévu que contienne la poche 14 et la somme des superficies des feuilles 11 et 12 en regard de la poche 14 est donc de 70 ml / 190 cm² soit 0,37 ml/cm².

On va maintenant décrire, à l'appui de la figure 5, l'agencement de la feuille 11.

Il est entendu que cette description vaut également pour la feuille 12, qui est identique.

La feuille 11 est bi-matière : elle comporte une couche interne 35 et une couche externe 36. La couche interne 35 est dans une première matière thermoplastique et la couche externe 36 est dans une deuxième matière thermoplastique distincte de la première matière.

La surface 30 en regard de la poche 14 fait partie de la couche interne 35.

Ici, la première matière thermoplastique avec laquelle est faite la couche interne 35 est du polyéthylène (PE) et la matière thermoplastique avec laquelle est faite la couche externe 36 est du polyester (PET).

On sait que le polyéthylène (PE) est une matière plastique soudable relativement aisément, la température de son point de fusion étant relativement basse et en tout cas plus basse que la température du point de fusion du polyester (PET).

Ainsi, la zone de soudure 13 peut être effectuée entre les feuilles 11 et 12 avec des électrodes portées à une température supérieure au point de fusion du polyéthylène (PE) et inférieure au point de fusion du polyester (PET), de sorte qu'il n'y a pas de fusion de la couche externe 36 des feuilles 11 et 12 lorsque la zone de soudure 13 est réalisée. Les faces externes des feuilles 11 et 12 gardent ainsi leur aspect lisse initial.

On sait également que le polyester (PET) offre une bonne étanchéité aux gaz, contrairement au polyéthylène (PE), de sorte que les feuilles 11 et 12 sont étanches non seulement aux liquides mais aussi aux gaz.

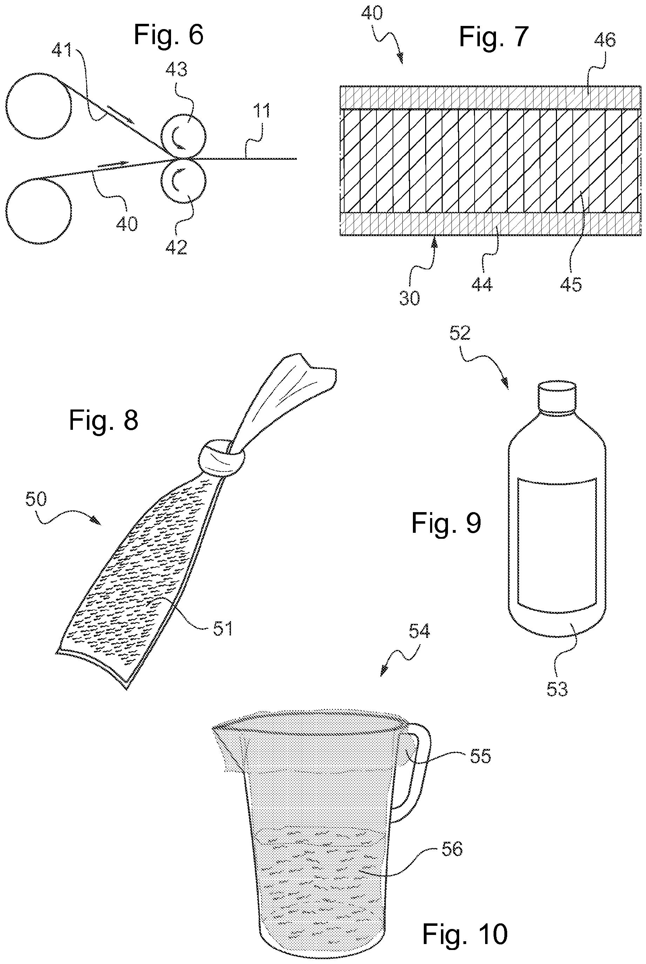

On va maintenant décrire à l'appui de la figure 6 comment l'on fabrique la feuille 11.

Il est entendu que la description donnée ci-après pour la fabrication de la feuille 11 vaut également pour la feuille 12 qui est identique.

La feuille 11 est fabriquée par superposition de deux films 40 et 41 chacun en provenance d'une bobine sur laquelle il est stocké, les films superposés étant comprimés à chaud par un couple de rouleaux 42 et 43 entre lesquels passent les films superposés. Les films 40 et 41 sont ainsi colaminés. Dans la feuille 11, la couche interne 35 est issue du film 40 et la couche externe 36 est issue du film 41.

Le film 41 est préparé par extrusion simple d'une seule nuance de polyester (PET).

Le film 40 est préparé par coextrusion de trois nuances différentes de polyéthylène (PE), de sorte que film 40 présente trois sous-couches superposées 44, 45 et 46, ainsi que montré sur la figure 7.

La sous-couche 44 est la sous-couche la plus interne. Par conséquent, la surface 30 de la feuille 11 fait partie de la sous-couche 44.

La sous-couche 46 est la sous-couche la plus externe, qui est donc recouverte par la couche externe 36.

La sous-couche 45 est une sous-couche intermédiaire entre la sous-couche 44 et la sous-couche 46.

La sous-couche 46 est prévue pour l'accrochage entre les films 40 et 41. Pour former la sous-couche 46, on utilise des granulés d'une nuance de polyéthylène (PE) appropriée pour opérer l'accrochage avec du polyester (PET).

La sous-couche 45 est prévue pour donner certaines caractéristiques mécaniques à la feuille 11. Pour former la sous-couche 45, on utilise des granulés d'une nuance de polyéthylène (PE) appropriée pour fournir ces caractéristiques mécaniques.

La sous-couche 44 la plus interne est prévue pour être soudable avec la sous-couche correspondante de l'autre feuille du sachet 10, afin que la zone de soudure 13 puisse être formée. La sous-couche 44 est par ailleurs prévue pour interagir avec la dose de semence diluée 27 via la surface en regard de la poche 14, c'est-à-dire la surface 30.

Pour former la sous-couche 44, on mélange, d'une part, des granulés de polyéthylène d'une nuance appropriée pour la soudure et, d'autre part, des granulés d'une association de polyéthylène et de triclosan à 15 % en poids de triclosan.

Les proportions du mélange de granulés sont de 99 % en poids des granulés de polyéthylène et de 1 % en poids des granulés de l'association de polyéthylène et de triclosan.

La matière mélangée obtenue contient donc 1% en poids de granulés de l'association de polyéthylène et de triclosan. Par conséquent, la matière mélangée obtenue contient 0,15 % en poids de triclosan. La sous-couche 44 contient donc 0,15 % en poids de triclosan.

Ainsi qu'indiqué ci-dessus, les films 40 et 41 sont superposés et comprimés à chaud par un couple de rouleaux 42 et 43 entre lesquels ils passent pour donner la feuille 11.

On notera que dans la feuille 11, il est relativement aisé de constater l'existence de la couche interne 35 et de la couche externe 36, mais qu'en raison du passage entre les rouleaux 42 et 43, il est difficile de distinguer dans la couche interne 35 les sous-couches 44, 45 et 46, qui sont toutefois présentes.

Dans la feuille 11, la sous-couche 44 représente 13 % du poids total de la feuille 11. Par conséquent, dans la feuille 11 il y a 0,15 % x 13 %, soit 0,02 %, ou autrement dit 20 mg de triclosan pour 100 g de feuille 11.

La feuille 11 ayant une densité de 92 g/m², il y a 18 mg de triclosan par m² de film.

On va maintenant décrire à l'appui des figures 8 à 10 comment est préparée la semence diluée prévue pour être conditionnée dans le sachet 10.

La figure 8 montre un sachet 50 de collecte contenant de la semence animale fraiche 51, ici de la semence de verrat.

La figure 9 montre un flacon 52 contenant un milieu de dilution 53 à mélanger avec de la semence animale fraiche telle que la semence 51 pour donner de la semence animale diluée telle que celle de la dose 27. Le milieu de dilution 53 est sans antibiotique.

La figure 10 montre un pichet 54 recouvert d'un sac 55 de protection.

L'ensemble formé par le pichet 54 recouvert du sac 55 contient de la semence animale diluée 56 obtenue par mélange de la semence animale fraiche 51 du sachet de collecte 50 avec le milieu de dilution 53 du flacon 52.

La semence diluée 56 est prévue pour être subdivisée en doses individuelles 27 remplissant chacune un sachet 10.

On va maintenant décrire un exemple de résultats obtenus avec le sachet 10 pour la conservation de la semence diluée.

### Exemple 1

En plus du sachet 10 (ci-après « *sachet A* »), on utilise un sachet (ci-après « *sachet B* ») semblable au sachet 10 mais dont les feuilles telles que 11 et 12 sont conventionnelles, c'est-à-dire sans triclosan.

A partir d'un même prélèvement de semence fraiche 51, on prépare extemporanément dans l'heure et en tout cas au plus tard dans les vingt-quatre heures de la semence diluée 56 avec le milieu de dilution sans antibiotique 53 (ci-après « *semence diluée A* ») et on prépare également de la semence diluée avec un milieu de dilution conventionnel contenant un antibiotique (ci-après *« semence diluée B »).*

La dilution est effectuée pour que la semence diluée A et la semence diluée B aient une concentration de 35 millions de spermatozoïdes par ml.

Un comptage bactérien effectué sur des échantillons alors prélevés a permis de vérifier que la semence diluée A et la semence diluée B ont initialement une charge bactérienne semblable.

On remplit ensuite un sachet A avec une dose de semence diluée A, un sachet B avec une dose de semence diluée B et un sachet B avec une dose de semence diluée A.

On laisse ensuite les sachets reposer six jours dans les conditions habituelles de conservation, c'est-à-dire à 17 °C en position horizontale.

La semence diluée de chaque sachet est ensuite analysée.

On effectue d'une part un comptage bactérien et d'autre part une évaluation de la motilité des spermatozoïdes.

On procède de même avec cinq autres prélèvements de semence fraiche de verrat.

Les tableaux ci-dessous donnent les résultats moyens obtenus pour les six prélèvements.

En ce qui concerne le comptage bactérien, les résultats sont les suivants :

| | Comptage bactérien (UFC/ml) |
|---|---|
| sachet B semence diluée A | 5.10⁴ |
| sachet A semence diluée A | 3.10⁴ |
| sachet B semence diluée B | 1.10⁴ |

Le comptage bactérien a été effectué par prélèvements d'échantillons puis mise en culture des échantillons prélevés dans des boîtes de Pétri contenant une gélose Trytone Soja Agar (TSA) pendant quarante-huit heures à 30°C. Une moitié des échantillons est cultivée en aérobiose et l'autre moitié en anaérobiose. Les résultats obtenus sont moyennés, ces résultats étant exprimés en unités formant colonie (UFC) par ml.

En ce qui concerne la motilité des spermatozoïdes, les résultats sont les suivants :

| | Motilité (%) |
|---|---|
| sachet semence diluée A | 65 |
| sachet A semence diluée A | 61 |

L'analyse de motilité est effectuée par un dispositif d'analyse du sperme assistée par ordinateur commercialisé par la demanderesse sous l'appellation CASA (Computer Assisted Sperm Analyzis).

Il s'agit d'analyses d'images déterminant le pourcentage de spermatozoïdes mobiles par rapport à l'ensemble des spermatozoïdes.

On va maintenant décrire deux autres exemples de résultats obtenus avec des sachets semblables au sachet 10 mais comportant une quantité différente de triclosan.

### Exemple 2

On procède de même que pour l'Exemple 1 mais avec des sachets dont la sous-couche telle que 44 des feuilles telles que 11 et 12 est formée avec un mélange de granulés dont les proportions ne sont pas 99 % en poids pour les granulés de polyéthylène et 1 % en poids pour les granulés de l'association de polyéthylène et de triclosan, mais de 99,5 % en poids des granulés de polyéthylène et 0,5 % en poids des granulés de l'association de polyéthylène et de triclosan.

Les feuilles du sachet A contiennent dans cet exemple 10 mg de triclosan pour 100 g de feuille, c'est-à-dire environ 9 mg de triclosan par m² de feuille ; et la sous-couche 44 la plus interne contient 0,075 % en poids de triclosan.

En ce qui concerne le comptage bactérien, les résultats obtenus sont les suivants :

| | Comptage bactérien (UFC/ml) |
|---|---|
| sachet B semence diluée A | 5.10⁴ |
| sachet A semence diluée A | 0,7.10⁴ |
| sachet B semence diluée B | 1.10⁴ |

En ce qui concerne la motilité, les résultats sont les suivants :

| | Motilité (%) |
|---|---|
| sachet B semence diluée A | 65 |
| sachet A semence diluée A | 65 |

### Exemple 3

On procède de même que pour l'Exemple 1 mais avec des sachets dont la sous-couche telle que 44 des feuilles telles que 11 et 12 est formée avec un mélange de granulés dont les proportions ne sont pas 99 % en poids pour les granulés de polyéthylène et 1 % en poids pour les granulés de l'association de polyéthylène et de triclosan, mais de 98,5 % en poids des granulés de polyéthylène et 1,5 % en poids des granulés de l'association de polyéthylène et de triclosan.

Les feuilles du sachet A contiennent dans cet exemple 29 mg de triclosan pour 100 g de feuille, c'est-à-dire environ 27 mg de triclosan par m² de feuille ; et la sous-couche 44 la plus interne contient 0,225 % en poids de triclosan.

En ce qui concerne le comptage bactérien, les résultats obtenus sont les suivants :

| | Comptage bactérien (UFC/ml) |
|---|---|
| sachet B semence diluée A | 5.10⁴ |
| sachet A semence diluée A | 0,04.10⁴ |
| sachet B semence diluée B | 1.10⁴ |

En ce qui concerne la motilité, les résultats obtenus sont les suivants :

| | Motilité (%) |
|---|---|
| sachet semence diluée A | 65 |
| sachet A semence diluée A | 65 |

### Quantité de triclosan libérée

On va maintenant décrire des essais avec le sachet de l'Exemple 3 pour déterminer la quantité du triclosan libérée dans la dose de semence diluée telle que 27 contenue dans la poche telle que 14 de ce sachet.

Pour simplifier les essais, ce n'est pas une dose de semence diluée qui a été conservée dans le sachet mais uniquement du milieu de dilution.

En l'occurrence, on a utilisé le milieu de dilution 53 (ci-après « *milieu A* ») et un milieu de dilution conventionnel contenant un antibiotique (ci-après *« milieu B »).*

On remplit un sachet de l'Exemple 3 avec une dose de milieu A et un sachet de l'Exemple 3 avec une dose de milieu B.

On laisse ensuite les sachets reposer cinq jours dans les conditions habituelles de conservation, c'est-à-dire à 17°C en position horizontale.

On analyse ensuite le milieu contenu dans chaque sachet, afin de déterminer la concentration en triclosan.

Cette analyse est effectuée par chromatographie en phase liquide couplée à un détecteur de masse en tandem (méthode LC-MS-MS).

A partir des concentrations obtenues, on détermine la quantité de triclosan libérée dans une dose complète prévue pour être contenue dans le sachet, c'est-à-dire dans 70 ml.

On notera que le poids de triclosan pris en compte dans les feuilles telles que 11 et 12 du sachet de l'Exemple 3 pour le calcul de la proportion libérée n'est pas le poids de triclosan dans l'ensemble de ces feuilles, mais seulement dans les parties en regard de la poche telle que 14. Ici, ces parties pèsent environ 1,835 g (déterminé après découpage et pesée). Comme il y a 29 mg de triclosan pour 100 g de feuille, la quantité de triclosan contenue dans ces parties est d'environ 532 µg.

Les résultats obtenus sont les suivants :

| | Quantité de triclosan libérée dans la dose | Proportion de triclosan libérée dans la dose |
|---|---|---|
| Milieu A | 2,7 µg | 0,5 % |
| Milieu B | 1,9 µg | 0,35 % |

On va maintenant commenter les résultats des différentes analyses décrites ci-dessus.

D'une façon générale, pour ces différentes analyses, la dispersion autour des valeurs moyennes est faible, de sorte que les résultats donnés ci-dessus peuvent être considérés comme significatifs.

On va maintenant commenter les résultats concernant la quantité de triclosan libérée dans les milieux de dilution.

On constate que les quantités libérées sont infimes (ici, autour de 1 %).

La demanderesse pense qu'avec les différents milieux de dilution existant, la quantité libérée devrait rester infime, par exemple inférieure à 2 % en poids.

On va maintenant commenter les résultats concernant le comptage bactérien.

On observera que pour chaque exemple, à l'issue de la période de conservation, la population de bactéries est significativement moins élevée pour les sachets selon l'invention, c'est-à-dire les sachets A contenant la semence diluée A, que pour les sachets témoins, c'est-à-dire les sachets B contenant la semence diluée A.

On observera également que pour chaque exemple, à l'issue de la période de conservation, la population de bactéries est comparable pour les sachets selon l'invention et pour les sachets conventionnels, c'est-à-dire les sachets B contenant la semence diluée B, voire plus faible pour les sachets selon l'invention.

Il peut donc être considéré que les sachets selon l'invention ont la capacité de conserver de la semence diluée avec un milieu sans antibiotique (semence A) dans des conditions bactériostatiques.

On va maintenant commenter les résultats concernant la motilité des spermatozoïdes.

On observera qu'à l'issue de la période de conservation, la motilité est comparable pour les sachets selon l'invention (sachets A) et les sachets conventionnels (sachets B).

Il peut donc être considéré que le triclosan que contiennent les sachets selon l'invention ne perturbe pas la motilité des spermatozoïdes.

D'une façon générale, il a été déterminé que le sachet selon l'invention offre de bonnes performances lorsque le rapport entre le volume de la poche telle que 14 et la somme des superficies des surfaces telles que 30 et 31 des feuilles telles que 11 et 12 en regard de ladite poche est compris entre 0,3 ml/cm² et 0,5 ml/cm².

De même, il a été déterminé que le sachet selon l'invention offre de bonnes performances lorsque le volume de la poche telle que 14 est compris entre 50 ml et 100 ml.

Il a également été déterminé que le sachet selon l'invention offre de bonnes performances lorsque la sous-couche la plus interne telle que 44 représente entre 12 % et 18 % en poids de la couche interne telle que 35 en matière thermoplastique soudable.

Dans l'exemple illustré, la couche interne telle que 35 a une épaisseur de l'ordre de 80 µm. Il a également été déterminé que le sachet selon l'invention offre de bonnes performances lorsque la couche interne telle que 35 a une épaisseur comprise entre 20 µm et 110 µm.

Il a aussi été déterminé que le sachet selon l'invention offre de bonnes performances lorsque la couche interne telle que 35 comporte entre 1 mg/m² et 40 mg/m² de triclosan, de préférence entre 10 mg/m² et 40 mg/m².

Il a par ailleurs été déterminé que le sachet selon l'invention offre de bonnes performances lorsque dans la sous-couche la plus interne telle que 44 il y a entre 0,0075 % et 0,3% en poids de triclosan, de préférence 0,075 % et 0,3% en poids de triclosan.

On va maintenant décrire comment peut être déterminée la quantité de triclosan que contient la feuille 11 ou la feuille 12.

On notera que la quantité déterminée s'exprime en poids par unité de surface d'une telle feuille (ici en mg/m²).

Un échantillon de la feuille 11 ou 12 est découpé au niveau de la poche 14 du sachet 10. Cet échantillon présente une superficie déterminée, par exemple 1 cm².

L'échantillon est ensuite plongé dans de l'acétone et soumis à sonication pendant 2h afin d'en extraire le triclosan.

La concentration en triclosan dans la solution obtenue est ensuite déterminée par chromatographie en phase liquide de la façon décrite ci-dessus à propos de la quantité de triclosan libérée.

On recommence ce dosage (immersion dans de l'acétone avec sonication puis détermination de la concentration de la solution obtenue) avec le même échantillon autant de fois qu'il le faut jusqu'à ce que l'on ne détecte plus de triclosan dans la solution obtenue.

Les quantités de triclosan déterminées à chaque dosage sont alors additionnées afin d'obtenir la quantité totale de triclosan initialement présente dans l'échantillon.

Cette quantité est enfin rapportée à la surface de l'échantillon.

On notera que l'on peut déterminer la quantité de triclosan dans la seule couche interne 35 en éliminant auparavant la couche externe 36, par exemple par érosion ou délamination. Cependant, ici, comme il n'y a pas de triclosan dans la couche externe 36, la quantité de triclosan par unité de surface ne change pas.

Bien entendu, il est possible d'extraire le triclosan de l'échantillon avec un solvant différent de l'acétone, par exemple le dichlorométhane, avec ou sans sonication ; et de déterminer la concentration de la solution obtenue par une autre méthode, par exemple la chromatographie liquide haute performance (HPLC) couplée à un détecteur UV à barrette de diodes DAD (méthode HPLC-UV-DAD).

Dans les exemples illustrés, le triclosan est prévu uniquement dans la sous-couche 44 la plus interne de la couche interne 35, ce qui est particulièrement économique. Dans des variantes non illustrées, il y a du triclosan ailleurs que dans la sous-couche la plus interne, par exemple dans toute la couche interne telle que 35 voire dans la couche externe telle que 36 ; ou une seule des feuilles 11 et 12 comporte du triclosan.

Dans des variantes non illustrées, la couche externe 36 en polyéthylène (PET) est remplacée par une couche de polyamide, par une couche d'aluminium ou par une couche de EVOH/Polypropylène ; et plutôt que de colaminer des films tels que 40 et 41, la feuille telle que 11 ou 12 est fabriquée entièrement par coextrusion.

Dans des variantes non illustrées, l'agencement du sachet est différent, avec par exemple le même conduit qui sert à la fois pour le remplissage et le vidage ; ou alors il n'y a pas de canule pour le vidage.

De nombreuses autres variantes sont possibles en fonction des circonstances, et l'on rappelle à cet égard que l'invention ne se limite pas aux exemples décrits et représentés.

## Revendications

1. Sachet de conditionnement de semence animale diluée convenant pour l'insémination artificielle, en particulier des espèces porcines, comportant deux feuilles souples (11, 12) fixées l'une à l'autre par une zone de soudure (13) délimitant une poche (14) ayant un volume prédéterminé lorsque ledit sachet (10) est rempli, ladite poche (14) étant prévue pour contenir une dose (27) de dite semence animale diluée ayant ledit volume prédéterminé, chaque dite feuille souple (11, 12) ayant sa surface (30, 31) en regard de ladite poche (14) qui fait partie d'une couche (35) de matière thermoplastique soudable ; **caractérisé en ce que**, pour une ou de préférence pour chaque dite feuille (11, 12), ladite couche de matière thermoplastique soudable (35) comporte du triclosan ; et le rapport entre ledit volume prédéterminé de ladite poche (14) et la somme des superficies des surfaces (30, 31) desdites feuilles (11,12) en regard de ladite poche (14) est compris entre 0,3 ml/cm² et 0,5 ml/cm².

2. Sachet selon la revendication 1, **caractérisé en ce que** ledit volume prédéterminé de ladite poche (14) est compris entre 50 ml et 100 ml.

3. Sachet selon l'une quelconque des revendications 1 ou 2, **caractérisé en ce que** ladite couche de matière thermoplastique soudable (35) comporte entre 1 mg/m² et 40 mg/m² de triclosan.

4. Sachet selon la revendication 3, **caractérisé en ce que** ladite couche de matière thermoplastique soudable comporte entre 10 mg/m² et 40 mg/m² de triclosan.

5. Sachet selon l'une quelconque des revendications 1 à 4, **caractérisé en ce que** ladite couche de matière thermoplastique soudable (35) comporte plusieurs sous-couches (44, 45, 46) faites dans des nuances différentes de ladite matière thermoplastique soudable, une ou de préférence chaque dite feuille souple (11, 12) ayant sa surface (30, 31) en regard de ladite poche (14) qui fait partie de la sous-couche (44) la plus interne, seule la sous-couche (44) la plus interne comportant du triclosan.

6. Sachet selon la revendication 5, **caractérisé en ce que** dans la sous-couche (44) la plus interne il y a entre 0,0075 % et 0,3 % en poids de triclosan.

7. Sachet selon l'une quelconque des revendications 5 ou 6, **caractérisé en ce que** ladite sous-couche (44) la plus interne représente entre 12 % et 18 % en poids de la couche (35) de matière thermoplastique soudable.

8. Sachet selon l'une quelconque des revendications 1 à 7, **caractérisé en ce qu'**une ou de préférence chaque dite feuille souple (11, 12) comporte, en outre de ladite couche (35) de matière thermoplastique soudable, au moins une autre couche (36) de matière distincte de ladite matière thermoplastique soudable, recouvrant ladite couche (35) de matière thermoplastique soudable du côté opposé à ladite poche (14), seule ladite couche (35) de matière thermoplastique soudable comportant du triclosan.

9. Sachet selon la revendication 8, **caractérisé en ce que** ladite autre couche (36) de matière distincte de ladite matière thermoplastique soudable est une couche externe faite dans une matière thermoplastique.

10. Sachet selon la revendication 9, **caractérisé en ce que** ladite matière thermoplastique soudable est du polyéthylène (PE) et ladite matière thermoplastique de la couche externe (36) est du polyester (PET).

11. Sachet selon l'une quelconque des revendications 1 à 10, **caractérisé en ce que** la ladite couche (35) de matière thermoplastique soudable a une épaisseur comprise entre 20 µm et 110 µm.

12. Système pour conditionner dans des sachets de la semence animale diluée, convenant pour l'insémination artificielle, en particulier pour les espèces porcines, comportant un milieu de dilution de semence fraiche (51) pour donner de la semence diluée (56) et des sachets à remplir avec ladite semence diluée ; **caractérisé en ce que** lesdits sachets (10) sont selon l'une quelconque des revendications 1 à 11 et ledit milieu de dilution (53) est sans antibiotique.

## Patentansprüche

1. Beutel zum Verpacken von verdünntem tierischem Samen zur künstlichen Besamung, insbesondere von Schweinen, der zwei biegsame Blätter (11, 12) umfasst, die aneinander durch eine Schweißzone (13) befestigt sind, die eine Tasche (14) abgrenzt, die ein vorbestimmteres Volumen hat, wenn der Beutel (10) gefüllt wird, wobei die Tasche (14) vorgesehen ist, um eine Dosis (27) des verdünnten tierischen Samens, die das vorbestimmte Volumen hat, zu enthalten, wobei jedes biegsame Blatt (11, 12) seine Oberfläche (30, 31) gegenüber der Tasche (14) hat, die Teil einer Schicht (35) aus schweißbarem Thermoplastmaterial ist; **dadurch gekennzeichnet, dass** für ein oder bevorzugt jedes Blatt (11, 12) die Schicht aus schweißbarem Thermoplastmaterial (35) Triclosan umfasst, und dass das Verhältnis zwischen dem vorbestimmten Volumen der Tasche (14) und der Summe der Flächen der Oberflächen (30, 31) der Blätter (11, 12) gegenüber der Tasche (14) zwischen 0,3 ml/cm² und 0,5 ml/cm² liegt.

2. Beutel nach Anspruch 1, **dadurch gekennzeichnet, dass** das vorbestimmte Volumen der Tasche (14) zwischen 50 ml und 100 ml liegt.

3. Beutel nach einem der Ansprüche 1 oder 2, **dadurch gekennzeichnet, dass** die Schicht aus schweißbarem Thermoplastmaterial (35) zwischen 1 mg/m² und 40 mg/m² Triclosan umfasst.

4. Beutel nach Anspruch 3, **dadurch gekennzeichnet, dass** die Schicht aus schweißbarem Thermoplastmaterial zwischen 10 mg/m² und 40 mg/m² Triclosan umfasst.

5. Beutel nach einem der Ansprüche 1 bis 4, **dadurch gekennzeichnet, dass** die Schicht aus schweißbarem Thermoplastmaterial (35) mehrere Unterschichten (44, 45, 46), die in unterschiedlichen Nuancen des schweißbaren Thermoplastmaterials gefertigt sind, umfasst, wobei ein oder bevorzugt jedes biegsame Blatt (11, 12) seine Oberfläche (30, 31) gegenüber der Tasche (14) hat, die Teil der Unterschicht (44) ist, die am weitesten innen liegt, wobei nur die Unterschicht (44), die am weitesten innen liegt, Triclosan umfasst.

6. Beutel nach Anspruch 5, **dadurch gekennzeichnet, dass** in der Unterschicht (44), die am weitesten innen liegt, zwischen 0,0075 Gew.-% und 0,3 Gew.-% Triclosan vorliegen.

7. Beutel nach einem der Ansprüche 5 oder 6, **dadurch gekennzeichnet, dass** die Unterschicht (44), die am weitesten innen liegt, zwischen 12 Gew.-% und 18 Gew.-% der Schicht (35) aus schweißbarem Thermoplastmaterial darstellt.

8. Beutel nach einem der Ansprüche 1 bis 7, **dadurch gekennzeichnet, dass** ein oder bevorzugt jedes biegsame Blatt (11, 12) neben der Schicht (35) aus schweißbarem Thermoplastmaterial mindestens eine andere Schicht (36) aus Material, das von dem schweißbaren Thermoplastmaterial unterschiedlich ist, umfasst, das die Schicht (35) aus schweißbarem Thermoplastmaterial auf der Seite gegenüber der Tasche (14) abdeckt, wobei nur die Schicht (35) aus schweißbarem Thermoplastmaterial Triclosan umfasst.

9. Beutel nach Anspruch 8, **dadurch gekennzeichnet, dass** die andere Schicht (36) aus Material, das von dem schweißbaren Thermoplastmaterial unterschiedlich ist, eine Außenschicht ist, die aus einem Thermoplastmaterial gebildet ist.

10. Beutel nach Anspruch 9, **dadurch gekennzeichnet, dass** das schweißbare Thermoplastmaterial Polyethylen (PE) ist, und dass das Thermoplastmaterial der Außenschicht (36) Polyester (PET) ist.

11. Beutel nach einem der Ansprüche 1 bis 10, **dadurch gekennzeichnet, dass** die Schicht (35) aus schweißbarem Thermoplastmaterial eine Stärke zwischen 20 µm und 110 µm hat.

12. System zum Verpacken in Beuteln des verdünnten tierischen Samens, der für die künstliche Besamung geeignet ist, insbesondere für Schweine, das ein Verdünnungsmilieu frischen Samens (51) umfasst, um verdünnten Samen (56) zu ergeben, und Beutel, die mit dem verdünnten Samen zu füllen sind, **dadurch gekennzeichnet, dass** die Beutel (10) einem der Ansprüche 1 bis 11 entsprechen, und das Verdünnungsmilieu (53) frei von Antibiotika ist.

## Claims

1. A bag for packaging diluted animal semen suitable for artificial insemination, in particular of porcine species, comprising two flexible sheets (11, 12) fastened to each other by a weld zone (13) delimiting a pouch (14) having a predetermined volume when said bag (10) is filled, said pouch (14) being provided to contain a dose (27) of said diluted animal semen having said predetermined volume, each said flexible sheet (11, 12) having its surface (30, 31) facing said pouch (14) forming part of a layer (35) of weldable thermoplastic material; **characterized in that**, for one or preferably for each said sheet (11, 12), said layer of weldable thermoplastic material (35) comprises triclosan; and the ratio between said predetermined volume of said pouch (14) and the sum of the surface areas of the surfaces (30, 31) of said sheets (11,12) facing said pouch (14) is comprised between 0.3 ml/cm² and 0.5 ml/cm².

2. A bag according to claim 1, **characterized in that** said predetermined volume of said pouch (14) is comprised between 50 ml and 100 ml.

3. A bag according to any one of claims 1 or 2, **characterized in that** said layer of weldable thermoplastic material (35) comprises between 1 mg/m² and 40 mg/m² of triclosan.

4. A bag according to claim 3, **characterized in that** said layer of weldable thermoplastic material comprises between 10 mg/m² and 40 mg/m² of triclosan.

5. A bag according to any one of claims 1 to 4, **characterized in that** said layer of weldable thermoplastic material (35) comprises several underlayers (44, 45, 46) made of different grades of said weldable thermoplastic material, one or preferably each said flexible sheet (11, 12) having its surface (30, 31) facing said pouch (14) forming part of the innermost sub-layer (44), only the innermost sub-layer (44) comprising triclosan.

6. A bag according to claim 5, **characterized in that** in the innermost sub-layer (44) there is between 0.0075 % and 0.3 % by weight of triclosan.

7. A bag according to any one of claims 5 or 6, **characterized in that** said innermost sub-layer (44) represents between 12 % and 18 % by weight of the layer (35) of weldable thermoplastic material.

8. A bag according to any one of claims 1 to 7, **characterized in that** one or preferably each said flexible sheet (11, 12) comprises, in addition to said layer (35) of weldable thermoplastic material, at least one other layer (36) of material that is distinct from said weldable thermoplastic material, covering said layer (35) of weldable thermoplastic material on the opposite side from said pouch (14), only said layer (35) of weldable thermoplastic material comprising triclosan.

9. A bag according to claim 8, **characterized in that** said other layer (36) of material that is distinct from said weldable thermoplastic material is an outside layer made from a thermoplastic material.

10. A bag according to claim 9, **characterized in that** said weldable thermoplastic material is polyethylene (PE) and said thermoplastic material of the outside layer (PE) is polyester (PET).

11. A bag according to any one of claims 1 to 10, **characterized in that** said layer (35) of weldable thermoplastic material has a thickness comprised between 20 µm and 110 µm.

12. A system for packaging diluted animal semen in bags, suitable for artificial insemination, in particular for porcine species, comprising a dilution extender of fresh semen (51) to give diluted semen (56) and bags to fill with said diluted semen; **characterized in that** said bags (10) are according to any one of claims 1 to 11 and said dilution extender (53) is without antibiotic.
